Europäisches Patentamt

European Patent Office

Office européen des brevets

(11) Publication number: **0 209 746**
**B1**

(12) **EUROPEAN PATENT SPECIFICATION**

(45) Date of publication of patent specification: **04.04.90**

(21) Application number: **86108604.9**

(22) Date of filing: **24.06.86**

(51) Int. Cl.⁵: **G 01 K 1/14**

(54) **Method and apparatus for measuring temperature of substrate.**

(30) Priority: **24.06.85 JP 135971/85**
**21.02.86 JP 37677/86**

(43) Date of publication of application:
**28.01.87 Bulletin 87/05**

(45) Publication of the grant of the patent:
**04.04.90 Bulletin 90/14**

(84) Designated Contracting States:
**DE FR GB NL**

(56) References cited:
**FR-A-1 216 700**
**FR-A-2 562 662**
**US-A-3 930 159**
**US-A-4 558 959**

**IBM TECHNICAL DISCLOSURE BULLETIN, vol. 25, no. 11B, April 1983, pages 6105,6106; J.F. CAIN et al.: "In-situ specimen temperature monitor for UHV chamber"**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Matsui, Yuchi Osaka Works**
**Sumitomo Elec. Ind. Ltd.**
**No. 1-3, Shimaya 1-chome Konohana-ku**
**Osaka-shi Osaka (JP)**

(74) Representative: **Patentanwälte Grünecker, Kinkeldey, Stockmair & Partner**
**Maximilianstrasse 58**
**D-8000 München 22 (DE)**

## Description

### Background of the invention

This invention relates to a method and apparatus for measuring the temperature of a substrate where a thin film of desired composition is deposited in a vacuum growth chamber by means of vacuum evaporation, chemical vapor growth, or molecular beam epitaxial growth.

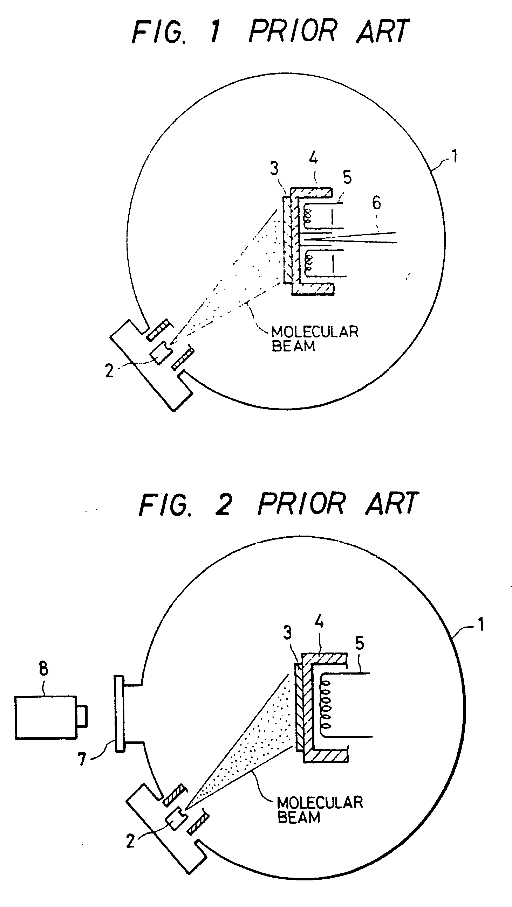

When an epitaxially grown film of GaAs is deposited on a substrate bonded with fused In by means of e.g., the molecular beam epitaxial growth, elements such as Ga, As making up the epitaxially grown film are conventionally contained in separate evaporation source cells 2 (hereinafter only one evaporation source cell is shown for brevity) within a high-vacuum growth chamber 1 shown in Fig. 1 and the evaporation source cell 2 is heated. The substances obtained by evaporation are then applied to a heated substrate 3 in the form of a molecular beam and evaporated molecules which do not contribute to evaporation are discharged from the growth chamber, so that the epitaxially grown film of GaAs is deposited on the substrate 3. If the intensity of As incident on the substrate 3 is sufficiently greater than that of Ga, As caused to react on Ga and used to form GaAs remains on the substrate 3. On the other hand, excessive As which has not reacted thereon is allowed to drift away from the substrate because the vapor pressure is high. As the substrate 3 is normally attached to a manipulator (not shown) within the growth chamber 1 and turned, it is heated not directly but by radiant heat derived from a heater 5 installed in a recess formed in the rear surface of a substrate holder 4 on which the substrate is bonded. The temperature of the substrate 3 is conventionally measured, for example, by a thermocouple 6 (using W-W · Re) inserted in the center of the recess formed in the rear surface of the substrate holder 4 as described in "Molecular Beam Epitaxy" K. Takahashi, Industrial Research Institute, pp 72—73.

Since GaAs is epitaxially grown while the substrate is being turned according to that method, the tip of the thermocouple 6 is made not to directly contact the substrate holder 4.

There has also been employed another method for measuring the temperature of the substrate 3, without using a thermocouple but a radiation thermometer 8 outside the growth chamber 1, by receiving thermal radiant rays from the surface of the substrate 3 through a window 7 of the growth chamber 1 as shown in Fig. 2.

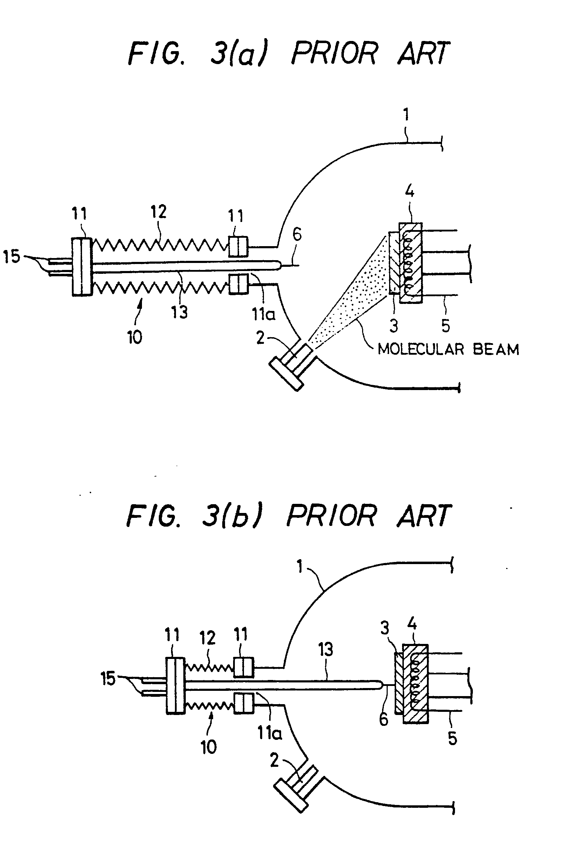

As shown in Figs. 3(a) and 3(b) further, the present inventor has employed the method of measuring the temperature of a substrate by allowing the tip of a thermocouple to directly contact the surface of the substrate where a thin film is formed. In Figs. 3(a) and 3(b), a substrate temperature measuring device 10 is attached to part of the wall of a growth chamber 1 through a high-vacuum flange 11. The substrate temperature measuring device 10 comprises, as shown in Figs. 3(a) and 3(b), a bellows 12 extensibly installed between a pair of high-vacuum flanges 11, 11, an insulating hollow cylindrical tube 13 inserted into the bellows 12, with the rear end supported by the high-vacuum flange 11 outside the growth chamber and the front end made protrusible into the growth chamber through an opening 11a of the high-vacuum flange 11 outside the growth chamber, and a thermocouple 6 inserted into the insulating hollow cylindrical tube 13. The rear end of the thermocouple 6 is connected to thermoelectronic terminals 15 insulation-shielded and vacuum-sealed in the high-vacuum flange 11 outside the growth chamber, whereas the front end thereof is protruded from the tip of the insulating hollow cylindrical tube 13 so as to measure the output generated in the thermocouple.

In the growth chamber 1 thus equipped with the substrate temperature measuring device 10, the bellows 12 is first extended by pulling the high-vacuum flange 11 outside the growth chamber in the direction opposite to the growth chamber as shown in Fig. 3(a) when a thin film of desired composition is deposited on the substrate 3 to prevent the thermocouple 6 from intercepting a molecular beam evaporating from an evaporation source cell 2.

When the temperature of the substrate 3 is measured before the thin film is deposited, the high-vacuum flange 11 outside the growth chamber is compressed toward the growth chamber so as to compress the bellows 12 and the tip of the thermocouple 6 is caused to contact the surface of the substrate. If the substrate holder 5 is grounded through the wall of the growth chamber, whether or not the thermocouple 6 is kept in contact with the surface of the substrate 3 can be judged by confirming the electrical conduction between the thermocouple terminals 15 and any one point on the wall of the growth chamber. On the other hand, the temperature of the substrate can be measured by means of the output taken out of the thermocouple terminals 15.

As shown in Fig. 1, if the temperature of the substrate is measured at the rear surface of the substrate holder, the temperature detected by the thermocouple will be different from the surface temperature of the substrate because the substrate holder bearing a different thermal capacity is juxtaposed between the thermocouple and the substrate and besides because the substrate is set far apart from the thermocouple. Moreover, if the thickness and shapes of the substrate holder and the substrate are changed, the thermal capacity will change and the difference between the temperature detected by the thermocouple and that on the surface of the substrate will become inconstant. When the thermocouple is replaced because of the disconnection of the thermocouple, the position of the tip of a new thermocouple will change and the show temperature difference will also fluctuate. If the thermocouple and the substrate holder are allowed to contact each other in order to prevent such problems from occuring, the tip of the thermocouple will wear and deteriorate when the substrate holder is turned during the growth of a thin film. The substrate holder is normally turned during the growth of a thin film to make uniform the distribution of the composition and thickness of the growth layer within the surface of the substrate.

As shown in Fig. 2, moreover, the method of measuring the surface temperature of the substrate by means of a radiation thermometer is disadvantageous in that the focus of the radiation thermometer can hardly be adjusted with accuracy and high reproducibility because the surface of the substrate is arranged in the form of a mirror and consequently the temperature readout is dependent on the adjustment of the focus. As the area of the substrate is as wide as what measures about 1 cm×1 cm, the temperature being measured is representative of an averaged one within the area in the case of a radiation thermometer. Since the thermocouple installed on the rear surface of the substrate holder is fixed in the center of the recess therein, the distribution of temperatures in the surface of the substrate is hardly measurable.

As shown in Figs. 3(a) and 3(b) further, although the method of measuring the substrate temperature by allowing the tip of the thermocouple to directly contact the surface of the substrate has greatly been improved as compared with those shown in Figs. 1 and 2 in view of the reproducibility and accuracy of temperature measurement, it still presents problems to be solved, e.g., the deformation of and damage to the tip of the thermocouple or cracks developed in the whole substrate wafer 3 because the bellows 12 may be excessively compressed when the tip of the thermocouple is caused to contact the surface of the substrate. Further, as shown in Fig. 3(b), errors produced by the repetition of temperature measurement ranged over about ±0.5°C due to the delicate fluctuation of the contact area when the tip of the thermocouple is made to contact the surface of the substrate.

Summary of the invention

The present invention is intended to remedy the drawbacks of conventional methods for measuring the temperature of a substrate on which a thin film is formed by means of vacuum evaporation, molecular beam epitaxial growth and the like, and it is therefore an object of the invention to provide a method and apparatus for measuring the temperature of a substrate the method and apparatus being capable of measuring the surface temperature of the substrate and the distribution of temperatures thereon with accuracy and promptitude, irrespective of the shape and thickness of the substrate on which a thin film is formed and preventing not only damage to a substrate wafer but also the deformation of and damage to the tip of a thermocouple.

In order to solve the above problems, the method of claim 1 is suggested. The apparatus for measuring the temperature of a substrate according to the present invention shows the features, specified in claim 6.

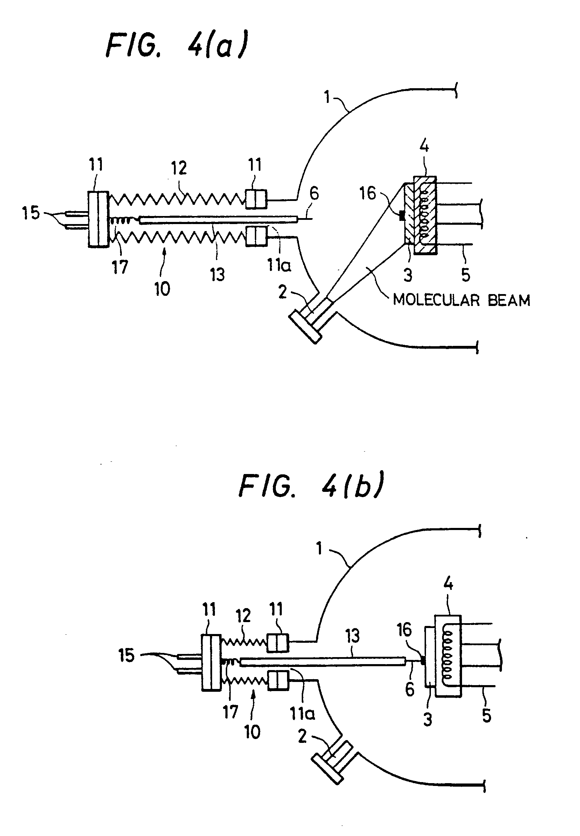

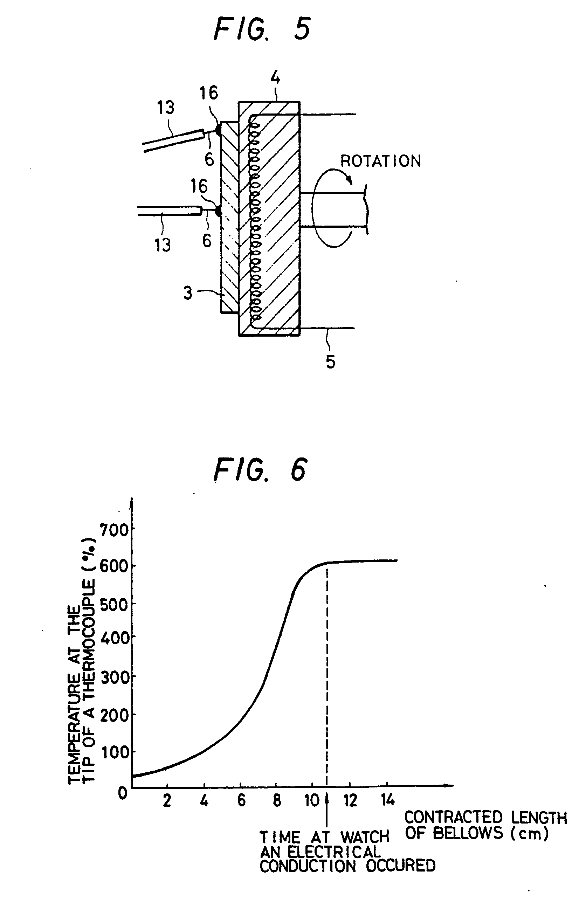

As shown in Fig. 5, drops of In, Ga etc. are formed on the surface of the substrate 3 to improve the thermal contact between the surface of the substrate and the tip of the thermocouple and the tip of the thermocouple 6 is dipped into the drops. Fig. 5 shows an example wherein the drops are formed in the center and at the edge of the substrate and, in both cases, the tip of the thermocouple 6 could be dipped into the drops by slightly tilting the bellows 12 shown in Figs. 4(a) and 4(b). Although some fear was entertained initially in that, because the substrate holder and the substrate were rotated during the growth of a thin film as shown in Fig. 5, the drops on the surface of the substrate might move around thereon and roughen the surface of a growth layer, the phenomenon wherein the drops might move around on the surface of the substrate was almost negligible to the extent that it posed no problem, provided that the size of the drop was roughly several mmφ or smaller and that the speed of rotation was lower than about 50 r.p.m. This means the presence of drops noway badly affected any portion other than where the drops were formed as far as the intended growth of the thin film was concerned. In the case of Fig. 4, the instant the tip of the thermocouple 6 was dipped into the drop 16, electrical conduction was obtained between the thermocouple 6 and the wall surface of the growth chamber 1 when the substrate was conductive. By making use of the above fact, the contact of the tip of the thermocouple with the drop could be detected, so that the direct contact of the tip of the thermocouple with the surface of the substrate could be avoided. When the substrate is an insulating one of such as Fe doped InP or Cr-0 doped GaAs, it is possible to detect the contact of the tip of the thermocouple with the drop by observing the temperature of the tip of the thermocouple. Fig. 6 shows a temperature change resulting from bringing the tip of the thermocouple close to the surface of the substrate. According to Fig. 6, no temperature change was observed after the tip of the thermocouple contacted the drops on the surface of the substrate. When the similar phenomenon was observed using a conductive substrate, the point at which the temperature became constant accurately conformed to the point of time at which electrical conduction between the wall surface of the growth chamber and the thermocouple was establshed. In view of the foregoing, the section wherein the temperature becomes constant is considered equivalent to a section starting with the contact of the tip of the thermocouple with the drops until the contraction of the spring after the contact thereof with the surface of the substrate. In consequence, the constant temperature based on the observation of the temperature change while the bellows 12 is compressed is equivalent to the surface temperature of the substrate. In order to find the point at which the temperature becomes constant, however, the bellows 12 must be compressed to confirm the point at which the temperature stops changing after the tip of the thermocouple contacts the drops. When such operation is conducted, the surface of the substrate will be pressed against the tip of the thermocouple and either the thermocouple or the substrate may be damaged extensively. For this reason, as shown in Figs. 4(a) and 4(b), the spring 17 having contraction and expansion properties was installed at the rear end of the thermocouple. As a result, even if the bellows 12 was further compressed after the tip of the thermocouple contacted the surface of the substrate, the force applied to the tip of the thermocouple being pressed against the surface of the substrate would be eased by the presence of the spring. Accordingly, even when the bellows was excessively compressed, no damage was caused to the tip of the thermocouple or the substrate.

From FR—A—1 216 700 a thermocouple is known which may be brought into contact with an object by moving the thermocouple towards the object being held in a chamber.

From US—A—4,558,959, a thermocouple is known for measuring the temperature of flat strip moving horizontally through a furnace. A ceramic insulated thermocouple element, inside an outer thermocouple member, moves within an outer thermocouple member in response to the urging of a spring and has a contact pad composed of a metal with a melting point such that a layer of molten metal forms on the contact pad for frictional heat from the moving strip.

The thermocouple is movable through the wall of the chamber and is supported at its rear end by means of a spring. The thermocouple is contained in bellows, extending between vacuum flanges, in order to assure a vacuum sealed movement of the thermocouple. The thermocouple is further surrounded by a cylindrical tube.

Brief description of the drawings

Figs. 1, 2 and 3(a) and 3(b) are sectional views illustrating a conventional method for measuring the surface temperature of a substrate.

Figs. 4(a) and 4(b) are sectional views of the principal portions of an apparatus embodying the present invention for measuring the surface temperature of a substrate.

Fig. 5 is a sectional view of a substrate with drops formed in the center and at the edge thereof.

Fig. 6 is a graph showing a temperature change with the tip of a thermocouple put close to the surface of a substrate.

Fig. 7 is an enlarged view of the rear end of the thermocouple according to the present embodiment.

Detailed description of the invention

An embodiment of the present invention will subsequently be described.

A substrate temperature measuring device 10 according to this embodiment is attached to part of the wall face of a growth chamber 1 through a high-vacuum flange 11. The substrate temperature measuring device 10 comprises, as shown in Figs. 4(a) and 4(b), a bellows 12 extensively installed between a pair of high-vacuum flanges 11, 11, an insulating hollow cylindrical tube 13 prepared from PBN (Pyrolytic Boron Nitride) or alumina and inserted into the bellows 12, with the rear end supported by the high-vacuum flange 11 outside the growth chamber through a spring having contraction and expansion properties and the front end made protrusible into the growth chamber through an opening 11a of the high-vacuum flange 11 outside the growth chamber, and a thermocouple 6 inserted into the insulating hollow cylindrical tube 13. The rear end of the thermocouple 6 is connected to thermoelectronic terminals 15, insulation-shielded and vacuum-sealed in the high-vacuum flange 11 outside the growth chamber, whereas the front end thereof is protruded from the tip of the insulating hollow cylindrical tube 13 so as to measure the output generated in the thermocouple. Metal Ga or In is bonded to a portion of the surface of the substrate 3 whose temperature is meaured, the portion making contact with the thermocouple 6, and these metals are kept in a molten state, e.g., over 30°C for Ga and over 200°C for In when the temperature of the substrate rises. The temperature of the substrate during its growth is normally at about 300°C. Because of surface tension, moreover, the metal is prevented from spreading over the surface of the substrate and continues to stick to part of the surface of the substrate as a drop 16.

In the growth chamber 1 thus equipped with the substrate temperature measuring device 10, the high-vacuum flange 11 outside the growth chamber is first pulled in the direction opposite to the growth chamber as shown in Fig. 4(a) to extend the bellows 12 when a thin film of desired composition is deposited on the substrate 3 so that the thermocouple may not intercept the molecular beam evaporated from an evaporating source cell 2.

When the temperature of the substrate 3 is measured before the thin film is deposited, the high-vacuum flange 11 outside the growth chamber is compressed in the direction of the growth chamber so as to compress the bellows 12 and the tip of the thermocouple 6 is caused to contact the surface of the substrate. After the thermocouple 6 contacts the surface of the substrate, the spring only is compressed even if the bellows 12 is further compressed because the extensible spring 17 is installed at the rear end of the thermocouple 6. Consequently, the contact force between the tip of the thermocouple 6 and the surface of the substrate 3 is kept roughly constant, thus nullifying the transformation of and damage to the thermocouple 6 or cracking of the substrate 3 in question. Since the tip of the thermocouple 6 keeps contact with the surface of the substrate in such a state that the tip thereof is dipped into the molten metal drop 16, the effective contact area between the surface of the substrate and the tip of the thermocouple becomes larger than that according to the conventional method without using the molten metal drop. Accordingly, delicate fluctuation in the contact area resulting from repeated measurement could be reduced to the extent that it is negligible as compared with the conventional methods. In consequence, an error produced by the repetition of temperature measurement could be reduced up to about ±0.1°C.

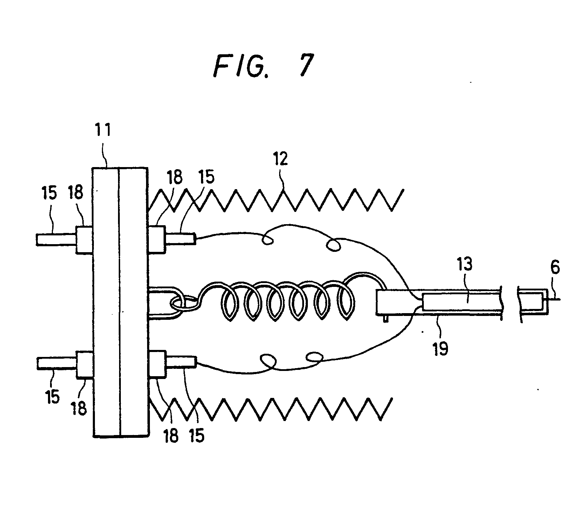

Fig. 7 shows an enlarged rear end of the thermocouple according to this embodiment. The W-Re thermocouple 6 in a tantalum hollow cylinder 19 is electrically insulated by an insulating hollow cylinder 13 and two branch wires of W-Re at the rear end of the thermocouple are electrically connected to corresponding two thermocouple terminals 15 of the flange 11 through two holes made in the side of the tantalum hollow cylinder. A spiral spring 17 is connected to the rear end of the tantalum hollow cylinder and the rear end of the spring is further fixed to the flange 11. The two branch wires of W-Re from the thermocouple terminals 15 up to the tantalum hollow cylinder are respectively protected by extremely thin PBN or alumina insulating tubes to prevent the W-Re wires from electrically contacting the spring 17 and the bellows 12 as the bellows 12 contracts and expands. The tantalum hollow cylinder employed in this embodiment is 4 mmφ in outer diameter and 1 m long, whereas the spiral spring 17 is 0.5 mmφ in diameter and about 5 cm long.

As is obvious from the above description, the method and apparatus for measuring the temperature of a substrate have effects in:

(1) accurately measuring the temperature of the surface of a substrate on which an intended thin film is formed because the temperature is measured by the direct contact of a thermocouple with the surface of the substrate;

(2) making extremely smaller the difference in temperature than that of conventional temperature measuring methods between the tip of the thermocouple and the uppermost surface of the substrate;

(3) accurately measuring the temperature of the surface of the substrate without being affected by the thickness of the substrate, the thickness and shape of a substrate holder;

(4) completely preventing the deformation of and damage to the tip of the thermocouple and the cracking of the substrate when they contact each other because a spring having contraction and expansion properties is installed at the rear end of the thermocouple;

(5) improving the reproducibility of temperature measurement because a molten metal drop is formed in the contact portion of the tip of the thermocouple; and

(6) measuring the temperature of the substrate on which a thin film is formed by means of not simply molecular beam epitaxial growth but also others such as organic metal epitaxial growth, chemical vapor growth, cluster ion beam epitaxial growth, vacuum evaporation, etc.

**Claims**

1. A method of measuring the temperature of a substrate (3) comprising the steps of:
forming a molten metal drop (16) on the surface of said substrate (3); and
dipping the tip of a thermocouple (6) into said molten metal drop.

2. A method of measuring the temperature of a substrate as claimed in claim 1, wherein said substrate (3) is conductive.

3. A method of measuring the temperature of a substrate as claimed in claim 2, further comprising the steps of:
detecting electrical conduction between said thermocouple (6) and a wall surface of a growth chamber so that contact of said tip of said thermocouple with said drop (16) is detected.

4. A method of measuring the temperature as claimed in claim 1, wherein said substrate (3) is insulated.

5. A method of measuring the temperature of a substrate as claimed in claim 4, further comprising the steps of observing the temperature of said tip of said thermocouple (6) as it approaches the surface of said substrate so that the contact of said tip of said thermocouple with said drop is detected.

6. An arrangement comprising a substrate, a metal drop formed on the surface thereof, and a thermocouple dipped into said metal drop, said thermocouple comprising a spring installed at its rear end, and which thermocouple measures the temperature of the substrate.

7. An arrangement as claimed in claim 6, wherein said drop is made of In or Ga.

8. An arrangement as claimed in claims 6 or 7, wherein a diameter of said drop is several mm or less and said substrate (3) rotates at the rotation speed of 50 r.p.m. or less.

9. An arrangement as claimed in claim 6, further comprising: a bellows (12) installed between a pair of high-vacuum flanges (11);
an insulating hollow cylindrical tube (13) inserted into said bellows, a rear end of said tube being supported by one of said pair of high-vacuum flanges through said spring (17) and a front end of said tube being protruded into a growth chamber (1) thorugh an opening (11a) of the other of said pair of high-vacuum flanges; and
thermoelectronic terminals (15) electrically shielded and vacuum-sealed in said one of said high-vacuum flanges (11), a rear end of said thermocouple being connected to said thermoelectronic terminals and a front end of said thermocouple being protruded from said insulating hollow cylindrical tube (13).

10. An arrangement as claimed in claim 9, wherein said insulating hollow cylindrical tube (13) is made of Pyrolytic Boron Nitride or alumina.

11. An arrangement as claimed in claim 10, further comprising a hollow cylinder of tantalum, said hollow cylinder enveloping said hollow cylindrical tube (13).

12. An arrangement as claimed in claim 11, wherein said thermocouple (6) is composed of W-Re wires, two branch wires of said W-Re wires at the rear end of said thermocouple being connected to said thermocouple terminals, and said branch wires being enveloped by thin Pyrolytic Boron Nitride or alumina insulating tubes.

## Patentansprüche

1. Verfahren zur Messung der Temperatur eines Substrats (3) mit den Verfahrensschritten:

Bilden eines geschmolzenen Metalltropfens (16) auf der Oberfläche des Substrats (3); und

Eintauchen der Spitze eines Thermoelements (6) in den Tropfen aus geschmolzenem Metall.

2. Verfahren zur Messung der Temperatur eines Substrats nach Anspruch 1, wobei das Substrat (3) Leitfähig ist.

3. Verfahren zur Messung der Temperatur eines Substrats nach Anspruch 2, mit den weiteren Verfahrensschritten:

Feststellen elektrischer Leitung zwischen dem Thermoelement (6) und einer Wandoberfläche einer Kristallzüchtkammer, so daß der Kontakt der Spitze des Thermoelements mit dem Tropfen (16) erfaßt wird.

4. Verfahren zur Messung der Temperatur nach Anspruch 1, wobei das Substrat (3) isoliert ist.

5. Verfahren zur Messung der Temperatur eines Substrats nach Anspruch 4, mit den weiteren Verfahrensschritten:

Beobachten der Temperatur der Spitze des Thermoelements (6) wenn es die Oberfläche des Substrats erreicht, so daß der Kontakt der Spitze des Thermoelements mit dem Tropfen erfaßt wird.

6. Eine Anordnung mit einem Substrat, einem Metalltropfen, der auf dessen Oberfläche gebildet ist, und mit einem Thermoelement, das in den Metalltropfen eintaucht, wobei das Thermoelement eine Feder, die an seinem hinteren Ende installiert ist, umfaßt, und das Thermoelement die Temperatur des Substrats mißt.

7. Eine Anordnung nach Anspruch 6, wobei der Tropfen aus Indium oder Gallium erzeugt ist.

8. Eine Anordnung nach Anspruch 6 oder 7, wobei ein Durchmesser des Tropfens mehrere Millimeter oder weniger beträgt und das Substrat (3) sich mit einer Rotationsgeschwindigkeit von 50 U/min oder weniger dreht.

9. Eine Anordnung nach Anspruch 6, die weiterehin umfaßt:

ein Gebläse (12), das zwischen einem Paar von Hochvakuumflanschen (11) angeordnet ist;

eine isolierende hohle zylindrische Röhre (13), die in das Gebläse eingeführt ist, wobei das hintere Ende der Röhre durch einen von dem Paar von Hochvakuumflanschen über die Feder (17) gehaltert ist und ein vorderes Ende der Röhre in die Kristallzüchtkammer (1) durch eine öffnung (11a) an dem anderen Ende des Paars von Hochvakuumflanschen eingeführt ist; und

thermoelektronische Terminals (15), die in dem einen der Hochvakuumflansche (11) elektrisch abgeschirmt und vakuumversiegelt sind, wobei ein hinteres Ende des Thermoelements mit den thermoelektronischen Terminals verbunden ist und ein vorderes Ende des Thermoelements aus der isolierenden hohlen zylindrischen Röhre (13) hervorgestreckt ist.

10. Eine Anordnung nach Anspruch 9, wobei die isolierende hohle zylindrische Röhre (13) aus pyrolytischem Bornitrid oder Aluminium hergestellt ist.

11. Eine Anordnung nach Anspruch 10, die weiterhin einen hohlen Zylinder aus Tantal umfaßt, wobei der hohle Zylinder die hohle zylindrische Röhre (13) umgibt.

12. Eine Anordnung nach Anspruch 11, wobei das Thermoelement (6) aus Wolfram-Rheniumdrähten hergestellt ist, zwei Zweigdrähte der Wolfram-Rheniumdrähte an dem hinteren Ende des Thermoelements mit den Thermoelementterminals verbunden sind und die Zweigdrähte von dünnen pyrolytischen isolierenden Bornitrid- oder Aluminiumrohren umgeben sind.

## Revendications

1. Procédé pour mesurer la température d'un substrat (3) comprenant les étapes suivantes:

formation d'une goutte (16) de métal fondu sur la surface dudit substrat (3); et

immersion de l'extrémité d'un thermocouple (6) dans ladite goutte de métal fondu.

2. Procédé pour mesurer la température d'un substrat selon la revendication 1, dans lequel ledit substrat (3) est conducteur.

3. Procédé pour mesurer la température d'un substrat selon la revendication 2, comprenant en outre les étapes suivantes:

détection d'une conduction électrique entre ledit thermocouple (6) et une surface de paroi d'une chambre de croissance de sorte que le contact de ladite extrémité du thermocouple avec ladite goutte (16) est détecté.

4. Procédé pour mesurer la température selon la revendication 1, dans lequel ledit substrat (3) est isolé.

5. Procédé pour mesurer la température d'un substrat selon la revendication 4, comprenant en outre les étapes d'observation de la températures de ladite extrémité dudit thermocouple (6) lorsqu'elle s'approche de la surface dudit substrat de sorte que le contact de ladite extrémité dudit thermocouple avec ladite goutte est détecté.

6. Dispositif comprenant un substrat, une goutte métallique formée sur la surface du substrat et un thermocouple plongé dans ladite goutte métallique, ledit thermocouple comprenant un ressort disposé à son extrémité arrière, et ledit thermocouple mesurant la température du substrat.

7. Dispositif selon la revendication 6 dans lequel ladite goutte est constituée par In ou Ga.

8. Dispositif selon la revendication 6 ou 7, dans lequel le diamètre de ladite goutte est de quelques mm ou moins et ledit substrat (3) tourne à la vitesse de rotation de 50 t/min ou moins.

9. Dispositif selon la revendication 6, qui comprend en outre: un soufflet (12) disposé entre deux brides (11) pour vide poussé; un tube cylindrique (13) creux isolant inséré dans ledit soufflet, l'extrémité arrière dudit tube étant supportée par l'une desdites brides pour vide poussé par l'intermédiaire dudit ressort (17) et l'extrémité avant dudit tube faisant saillie dans une chambre de croissance (1) par une ouverture (11a) de l'autre desdites brides pour vide poussé; et des bornes thermoélectroniques (15) à blindage électrique et étanches au vide dans ladite bride (11) pour vide poussé, l'extrémité arrière dudit thermocouple étant reliée aux dites bornes thermoélectroniques et l'extrémité avant dudit thermocouple faisant saillie depuis ledit tube cylindrique (13) creux isolant.

10. Dispositif selon la revendication 9, dans lequel ledit tube cylindrique (13) creux isolant est constitué par du nitrure de bore pyrolytique ou de l'alumine.

11. Dispositif selon la revendication 10, comprenant en outre un cylindre creux en tantale, ledit cylindre creux enveloppant ledit tube cylindrique creux (13).

12. Dispositif selon la revendication 11, dans lequel ledit thermocouple (6) est constitué par des fils de W-Re, deux fils de branchement desdits fils de W-Re à l'extrémité arrière dudit thermocouple étant reliés auxdites bornes du thermocouple, et lesdits fils de branchement étant enveloppés par des tubes isolants minces en nitrure de bore pyrolytique ou en alumine.

## FIG. 1 PRIOR ART

MOLECULAR
BEAM

## FIG. 2 PRIOR ART

MOLECULAR
BEAM

## FIG. 3(a) PRIOR ART

MOLECULAR BEAM

## FIG. 3(b) PRIOR ART

# FIG. 4(a)

# FIG. 4(b)

## FIG. 5

## FIG. 6

4

## FIG. 7